# EUROPÄISCHE PATENTANMELDUNG

(11) **EP 2 605 130 A1**
(43) Veröffentlichungstag der Anmeldung: **19.06.2013**
(21) Anmeldenummer: 13001280.0
(22) Anmeldetag: 21.06.2011
(51) Int. Cl.: G06F 9/44, G05B 19/414

(54) **Benutzerschnittstellensystem zum Bedienen von Maschinen**

(30) Priorität: 02.07.2010 CH 10892010
(62) Teilanmeldung aus: 11748872.6
(71) Anmelder: Ferag AG, 8340 Hinwil (CH)
(72) Erfinder: Markus, Felix, 8805 Richterswil (CH)
(74) Vertreter: Rentsch Partner AG

(57) **Zusammenfassung**

Zum Erzeugen einer grafischen Benutzerschnittstelle für die Bedienung von einer oder mehreren Maschinen wird eine Grafiksymbolbibliothek mit einer Vielzahl von grafischen Steuerelementen erstellt und gespeichert (S12), Überdies wird eine Funktionsbibliothek erstellt und gespeichert (S11), welche eine Vielzahl von Funktionsbezeichnungen mit zugeordneten Klassifizierungsinformationen umfasst. Aus der Funktionsbibliothek werden für eine Benutzerschnittstelle Funktionsbezeichnungen selektiert (S21) und den Funktionsbezeichnungen grafische Steuerelemente aus der Grafiksymbolbibliothek (27) zugeordnet (S15). Die Gruppierung und Anordnung (S23) der grafischen Steuerelemente in der Benutzerschnittstelle erfolgt basierend auf den Klassifizierungsinformationen, klassenspezifischen Regeln und gespeicherten Designregeln. Die Darstellung der Benutzerschnittstelle auf einer berührungsempfindlichen Anzeige erfolgt abhängig von der Grösse der Anzeige und Funktionsberechtigungen eines Benutzers. Für eine berechtigungsunabhängige Eingabe eines Steuerbefehls ist ein elektromechanisches Steuerelement vorgesehen.

## Beschreibung

### Technisches Gebiet

Die vorliegende Erfindung betrifft ein Benutzerschnittstellensystem zum Bedienen von Maschinen. Die vorliegende Erfindung betrifft insbesondere ein computerbasiertes Benutzerschnittstellensystem und ein computerimplementiertes Verfahren zum Erzeugen von grafischen Benutzerschnittstellen für die Bedienung von einer oder mehreren Maschinen, insbesondere Druckmaschinen, Druckproduktweiterverarbeitungsmaschinen und -anlagen.

### Stand der Technik

Für die Bedienung von Maschinen setzen sich zunehmend Benutzerschnittsteilen mit grafischen Bedienoberflächen durch, die auf einer berührungsempfindlichen Anzeige dargestellt werden, d.h. auf einem berührungsempfindlichen Bildschirm oder "Touch Screen" für die Wiedergabe (Output) und Eingabe (Input) von Daten und Instruktionen. Dies nicht zuletzt deshalb, weil derartige berührungsempfindlichen Anzeigen eine flexiblere und kostengünstigere Anpassung ermöglichen, als beispielsweise Mensch-Maschine-Schnittstellen mit elektromechanischen Bedienelementen, wie herkömmliche Tasten, Tastaturen oder bewegliche Computermäuse.

W007025396A hat eine graphische Benutzerschnittstelle zum Gegenstand, welche sowohl aus einem Touchscreen als auch aus mechanischen Tasten und Drehschaltern besteht. Es wird ein Verfahren und eine Vorrichtung zur Steuerung von Abläufen einer oder mehrerer Maschinen mit einer Bedieneinheit, ausgebildet als Mensch-Maschinen-Interface, offenbart. Die Abläufe und Parameter werden an der Bedienoberfläche der Bedieneinheit durch den Benutzer bildschirmunterstützt mittels Eingabestellen programmiert und auch operativ verändert. Die Bedieneroberfläche wird auf zwei Bedienfelder aufgeteilt. Das erste Bedienfeld weist einen relativ grossen Bildschirm auf und dient neben der Visualisierung von Betriebszuständen, Tabellen, Listen, usw. vor allem auch der Ablaufprogrammierung. Das zweite Bedienfeld dient als eine zentrale Funktion für operative Eingriffe. Beide Bedienfelder sind für einen Datenaustausch in beiden Richtungen ausgebildet.

DE112005001152 beschreibt ein Verfahren zum Abrufen und Anzeigen technischer Daten für eine Industrieeinrichtung. Gegenstand von DE112005001152 ist ein Verfahren um eine Benutzerschnittstelle auf einem mobilen Computer mit relativ kleinen Anzeige- und Eingabevorrichtungen auf eine grösseres Terminal, welches mit einer Industrieeinrichtung verbunden ist, zu übertragen. Sobald sich ein Benutzer, welcher z.B. einen tragbaren PDA (Personal Digital Assistent) bedient, dem grossen Bildschirm der Industrieeinrichtung nähert, wird durch eine drahtlose Einrichtung in der Nähe des grossen Bildschirms eine im PDA integrierte drahtlose Einrichtung erkannt und eine Verbindung wird aufgebaut. Der Benutzer kann anschliessend das entsprechende Terminal markieren und auswählen. Der grosse Bildschirm zeigt z.B. eine Kopie der gleichen Anzeige wie auf dem PDA des Benutzers. Durch das Bereitstellen mehrer Instanzen einer graphischen Benutzerschnittstelle können auf diese Weise schnell Parameter einer speziellen Maschine abgefragt und manipuliert werden.

EP1156437A2 hat ein System und Verfahren zur Überwachung eines Druckproduktions-Workflows zum Gegenstand: Das System umfasst Workflow-Management-Software, die die Verfahrensschritte des Workflows, nämlich den Auftragsbeginn, den Auftragseingang, die Auftragsbearbeitung, die Druckproduktion und die Auftragsvollendung überwacht und erleichtert. Die Workflow-Management-Software umfasst eine integrierte objektorientierte Schnittstelle, die den Workflow visuell darstellt und mittels derer in den Workflow eingegriffen werden kann. Ausserdem bietet die Software die Funktionalität, zusammengesetzte Dokumente als geordnete Sammlungen von Dokumenten zu erstellen, zu bearbeiten und zu verändern. Die Workflow-ManagementSoftware ermöglicht z.B. Ausschneide-, Kopier-, Einfüge-, Verschiebe-Aktionen auf einer Seite oder auf mehreren Seiten eines Dokuments. Diese Funktionalität wird vorzugsweise mittels Pull-down-Menüs, eingeblendeten Dialogfenstern, Optionsleisten oder Symbole erreicht. Ausserdem werden die Ergebnisse der Aktionen in einer visuellen Darstellung des Dokuments auf dem Display der Bearbeitungsstation angezeigt. Display-Fenster dienen der intuitiven visuellen Darstellung der Arbeit, die an einer Bearbeitungsstation geleistet werden muss.

In DE102008001665A werden Verfahren zur Generierung von einheitlichen Benutzeroberflächen für die Steuerung von Textilmaschinen beschrieben. Neben Basisanwendungsprogrammen werden häufig Zusatzanwendungsprogramme mit Zusatzfunktionalitäten implementiert, die in aller Regel von unterschiedlichen Programmierern erstellt werden und Benutzeroberflächen gemäss unterschiedlichen Bedienphilosophien mit unterschiedlichen Erscheinungsbildern aufweisen. Dies führt zu einem hohen Schulungsaufwand für die Bediener sowie zu einer erhöhten Gefahr von Fehlbedienungen. Zudem steigt der Zeitaufwand für die Bedienung während des Einsatzes der Textilmaschine. Um dies zu vermeiden wird in DE102008001665A die Verwendung eines unabhängigen Graphikprogrammmoduls vorgeschlagen, in dem Darstellungselemente bzw. Darstellungsroutinen abgelegt werden. Somit kann ein Zusatzanwendungsprogramm weitgehend unabhängig vom Basisanwendungsprogramm entwickelt werden und der Bediener findet automatisch ein einheitliches Erscheinungsbild mit einer einheitlichen Bedienphilosophie vor, sowohl im Basisanwendungsbereich also auch im Zusatzanwendungsbereich. DE102008001665A unterstützt somit einen Hersteller von Textilmaschinensteuerungen bei der Entwicklung von Benutzeroberflächen, die für Basisanwendungen und ihre Zusatzfunktionen einheitlich sind.

Für die Bedienung von Maschinen in der Industrie, insbesondere Maschinen in der Druck- und Druckproduktweiterverarbeitungsindustrie, werden hinsichtlich Konfiguration, Steuerung, Überwachung, Wartung sowie Aufbereitung und Darstellung von betriebswirtschaftlichen und operationellen Informationen Benutzerschnittstellen benötigt für unterschiedlichste Geschäftsbereiche, Maschinentypen, Funktionen, Benutzer und Benutzerberechtigungen, sowohl auf der Leitebene mit mehreren miteinander verbundenen Maschinen, als auch auf der Ebene von einzelnen Maschinen oder auf der Stationsebene mit Teilen von einzelnen Maschinen. In der Regel werden proprietäre Benutzschnittstellen der Hersteller der Maschinen eingesetzt, was insgesamt zu uneinheitlichen Bedienoberflächen führt, wenn Maschinen und/oder Stationen von unterschiedlichen Herstellern und/oder Maschinengenerationen kombiniert eingesetzt werden. Hinsichtlich effizienter Ausbildung, Benutzung, Entwicklung und Anpassung sind jedoch möglichst einheitliche grafische Bedienoberflächen gewünscht, die zurzeit im Stand der Technik nicht verfügbar sind.

Des Weiteren besteht die Anforderung, dass die Bediengeräte für die grafischen Bedienoberflächen kostengünstig und im industriellen Umfeld an oder bei den jeweiligen Maschinen oder Maschinenkomponenten angeordnet bzw. angebracht werden können. Oftmals bestehen dabei Dimensionsbeschränkungen, da im Industriellen Umfeld verschiedene logistische, sicherheitsbezogene oder operative Rahmenbedingungen einzuhalten sind. Derartige Rahmenbedingungen führen regelmässig dazu, dass die Bedienoberflächen auf 5 bis 15 Zoll Bildschirmgrössen begrenzt sind.

### Darstellung der Erfindung

Es ist eine Aufgabe der vorliegenden Erfindung ein computerbasiertes Benutzerschnittstellensystem zum Bedienen von Maschinen und ein computerimplementiertes Verfahren zum Erzeugen von grafischen Benutzerschnittstellen für die Bedienung von einer oder mehreren Maschinen bereitzustellen, welche zumindest einige Nachteile der bekannten Systeme nicht aufweisen.

Die Aufgabe wird durch die Merkmale der unabhängigen der Ansprüche gelöst. Weitere vorteilhafte Ausführungsformen gehen ausserdem aus den abhängigen Ansprüchen und der Beschreibung hervor.

Vorerst sei festgehalten, dass mit dem Ausdruck "Bedienung von einer oder mehreren Maschinen" die verschiedensten Aktivitäten miteingeschlossen werden für die Konfiguration, Steuerung, Überwachung, Wartung, übergeordnete Produktionsplanung von jeweils einer Maschine, einem Maschinenteil (Station) und/oder einer Anlage mit mehreren Maschinen in jeweils einer oder mehreren Produktionslinien, und auch die Abfrage, Aufbereitung und Darstellung von operationellen, betriebstechnischen und betriebswirtschaftlichen Informationen umfasst.

Eine Ausgestaltung der Erfindung zeichnet sich dadurch aus, dass zum Erzeugen von grafischen Benutzerschnittstellen für die Bedienung von einer oder mehreren Maschinen eine Grafiksymbolbibliothek mit einer Vielzahl von grafischen Steuerelementen gespeichert wird, dass eine Funktionsbibliothek mit einer Vielzahl von Funktionsbezeichnungen gespeichert wird, denen jeweils Klassifizierungsinformationen zugeordnet sind, dass Funktionsbezeichnungen aus der Funktionsbibliothek für die Benutzerschnittstelle selektiert werden, dass grafische Steuerelemente aus der Grafiksymbolbibliothek den Funktionsbezeichnungen zugeordnet werden, dass die den selektierten Funktionsbezeichnungen zugeordneten grafischen Steuerelemente in der Benutzerschnittstelle basierend auf den Klassifizierungsinformationen gruppiert und angeordnet werden, und dass die grafische Benutzerschnittstelle zur Darstellung auf einer Anzeige basierend auf der Grafiksymbolbibliothek und der bestimmten Gruppierung und Anordnung der grafischen Steuerelemente erzeugt wird. Die Erstellung und Verwendung einer Grafiksymbolbibliothek mit grafischen Steuerelementen und einer Funktionsbibliothek mit klassifizierten Funktionsbezeichnungen ermöglicht die Entwicklung und Generierung einheitlicher Benutzerschnittstellen sowohl als gespeicherter Programmcode, vor dem Einsatz für die Maschinenbedienung, als auch dynamisch, während dem Betrieb der Maschinen.

In einer Ausführungsvariante umfassen die Klassifizierungsinformationen Funktionsgruppen, Funktionsuntergruppen, Anwendungskennungen, Maschinentypkennungen, Geschäftsbereichskennungen, Produkttypkennungen, Produktkennungen, Prozesskennungen und/oder Hierarchiestufen, und die Gruppierung und Anordnung der grafischen Steuerelemente erfolgt basierend auf klassenspezifischen Regeln.

In einer weiteren Ausführungsvariante erfolgt die Gruppierung und Anordnung der grafischen Steuerelemente in der Benutzerschnittstelle zudem basierend auf gespeicherten Designregeln, welche die Anzahl gleichzeitig in der Benutzerschnittstelle dargestellten grafischen Steuerelemente, die Anzahl in einer horizontalen Reihe angeordneten grafischen Steuerelemente, die Anzahl in einer vertikalen Spalte angeordneten grafischen Steuerelemente, die minimale Grösse von grafischen Steuerelementen, die zulässige Kombinationen von grafischen Steuerelementen, die Farbkombinationen von benachbarten grafischen Steuerelementen, die Farbkombinationen von in einer horizontalen Reihe angeordneten grafischen Steuerelementen, und/oder die Farbkombinationen von in einer vertikalen Spalte angeordneten grafischen Steuerelementen umfassen.

In einer weiteren Ausführungsvariante erfolgt die Zuordnung von grafischen Steuerelementen aus der Grafiksymbolbibliothek zu den Funktionsbezeichnungen jeweils abhängig von den Klassifizierungsinformationen, die der betreffenden Funktionsbezeichnung zugeordnet sind.

Eine weitere Ausgestaltung der Erfindung zeichnet sich dadurch aus, dass ein computerbasiertes Benutzerschnittstellensystem zum Bedienen von Maschinen, eine berührungsempfindliche Anzeige zum Darstellen einer grafischen Bedienoberfläche und zum Entgegennehmen und Ausgeben von Nutzdaten mit Funktionsbefehlen und Funktionsparametern über die Bedienoberfläche umfasst, dass ein Kommunikationsmodul zum Austauschen der Nutzdaten mit einer oder mehreren der Maschinen, und ein zwischen Maschinen und Anzeige eingefügtes Präsentationsmodul zum Darstellen der Bedienoberfläche auf der Anzeige abhängig von Systemparametern vorgesehen sind. Das Präsentationsmodul ermöglicht eine dynamische Anpassung der Darstellung von Benutzerschnittstellen an systemspezifische Zustände und Bedingungen, während dem Betrieb der Maschinen.

In einer Ausführungsvariante ist das Präsentationsmodul eingerichtet, die Bedienoberfläche auf der Anzeige abhängig von einer definierten Grösse der Anzeige darzustellen. Mit der Grösse einer Anzeige ist die Grösse des Anzeigebereichs (und bei einer berührungsempfindlichen Anzeige in der Regel die Grösse des entsprechenden berührungsempfindlichen Eingabebereichs), also die Bildschirmgrösse, z.B. die Bildschirmdiagonale oder die Bildschirmhöhe und -breite, gemeint.

In einer weiteren Ausführungsvariante weisen die Maschinen unterschiedliche Technologieplattformen auf, und das Benutzerschnittstellensystem umfasst ein zwischen Technologieplattformen und Präsentationsmodul eingefügtes Anpassungsmodul zum plattformunabhängigen Austausch von Nutzdaten zwischen Maschinen und Bedienoberfläche.

In einer bevorzugten Ausführungsvariante ist das Präsentationsmodul eingerichtet, die Bedienoberfläche auf der Anzeige abhängig von Berechtigungen eines eingeloggten oder angemeldeten Benutzers mit unterschiedlichen grafischen Steuerelementen und mit unterschiedlicher Anordnung dieser Steuerelemente darzustellen.

In einer weiteren Ausführungsvariante umfasst das Benutzerschnittstellensystem ein elektromechanisches Steuerelement zur berechtigungsunabhängigen Eingabe eines Steuerbefehls.

In einer Ausführungsvariante weist die Bedienoberfläche mehrere als grafische Symbole dargestellte Steuerelemente für eine direkte Eingabe von Steuerbefehlen auf, welche in einem fest definierten Bereich der Anzeige angeordnet sind, und die Bedienoberfläche weist einen variablen Bereich auf, der ausserhalb des fest definierten Bereichs der Anzeige angeordnet ist und für temporär verfügbare Steuerelemente und zum Eingeben und Ausgeben von Nutzdaten vorgesehen ist.

In einer weiteren Ausführungsvariante ist das Präsentationsmodul eingerichtet, abhängig von einer definierten Grösse der Anzeige einen ersten Teilbereich der Anzeige für fest verfügbare Steuerelemente und einen zweiten Teilbereich der Anzeige für temporär verfügbare Steuerelemente bereitzustellen.

In einer Ausführungsvariante ist das Präsentationsmodul eingerichtet, abhängig von einer definierten Grösse der Anzeige den zweiten Teilbereich der Anzeige mindestens teilweise den ersten Teilbereich der Anzeige überlappend anzuordnen.

Eine weitere Ausgestaltung der Erfindung zeichnet sich dadurch aus, dass zum Erzeugen von grafischen Benutzerschnittstellen für die Bedienung von einer oder mehreren Maschinen, Funktionsbezeichnungen erfasst werden, dass Hierarchiestufen und grafische Steuerelemente den Funktionsbezeichnungen zugeordnet werden, dass die grafischen Steuerelemente in der Benutzerschnittstelle abhängig von den Hierarchiestufen der zugeordneten Funktionsbezeichnungen angeordnet werden, wobei grafische Steuerelemente von Funktionsbezeichnungen mit hoher Hierarchiestufe in einem fest definierten Bereich der Benutzerschnittstelle und grafische Steuerelemente von Funktionsbezeichnungen mit tiefer Hierarchiestufe in einem variablen Bereich der Benutzerschnittstelle, ausserhalb des fest definierten Bereichs der Benutzerschnittstelle, angeordnet werden, und dass die grafischen Benutzerschnittstellen zur Darstellung auf einer Anzeige jeweils mit der Anordnung der grafischen Steuerelemente von Funktionsbezeichnungen mit hoher Hierarchiestufe im fest definierten Bereich der Benutzerschnittstelle erzeugt werden.

In einer Ausführungsvariante werden die Grösse des fest definierten Bereichs der Benutzerschnittstelle und die Grösse des variablen Bereichs der Benutzerschnittstelle abhängig von der Grösse der Anzeige bestimmt.

In einer weiteren Ausführungsvariante werden die Grösse des fest definierten Bereichs der Benutzerschnittstelle und die Grösse des variablen Bereichs der Benutzerschnittstelle abhängig von einer Anzahl berechtigter Funktionen eines Benutzers bestimmt.

Eine weitere Ausgestaltung der Erfindung zeichnet sich dadurch aus, dass zum Erzeugen von grafischen Benutzerschnittstellen für die Bedienung von einer oder mehreren Maschinen, Funktionsbezeichnungen erfasst werden, dass Benutzeridentifizierungen erfasst werden, dass Funktionsbezeichnungen Benutzeridentifizierungen zugeordnet werden, dass grafische Steuerelemente den Funktionsbezeichnungen zugeordnet werden, dass benutzerspezifische Anordnungen der grafischen Steuerelemente basierend auf der Zuordnung von Funktionsbezeichnungen zu Benutzeridentifizierungen bestimmt werden, und dass die grafischen Benutzerschnittstellen zur Darstellung auf einer Anzeige jeweils für einen Benutzer basierend auf der betreffenden benutzerspezifischen Anordnung der grafischen Steuerelemente erzeugt werden.

In einer Ausführungsvariante wird die benutzerspezifische Anordnung der grafischen Steuerelemente basierend auf definierten Regeln mit Farbkompositionsregeln, Symbolkombinationsregeln und/oder Designregeln bestimmt.

Eine weitere Ausgestaltung der Erfindung zeichnet sich dadurch aus, dass eine Vorrichtung zum Erzeugen von grafischen Benutzerschnittstellen für die Bedienung von einer oder mehreren Maschinen ein Datenerfassungsmodul zum Entgegennehmen und Speichern von Funktionsbezeichn ungen, einen Datenspeicher zum Speichern von Zuordnungen von Hierarchiestufen und grafischen Steuerelementen zu den Funktionsbezeichnungen, und ein Layoutmodul zum Anordnen der grafischen Steuerelemente in der Benutzerschnittstelle abhängig von den Hierarchiestufen der zugeordneten Funktionsbezeichnungen umfasst. Dabei werden grafische Steuerelemente von Funktionsbezeichnungen mit hoher Hierarchiestufe in einem fest definierten Bereich der Benutzerschnittstelle und grafische Steuerelemente von Funktionsbezeichnungen mit tiefer Hierarchiestufe in einem variablen Bereich der Benutzerschnittstelle, ausserhalb des fest definierten Bereichs der Benutzerschnittstelle, angeordnet. Die Vorrichtung umfasst überdies einen Schnittstellengenerator zum Erzeugen der grafischen Benutzerschnittstellen zur Darstellung auf einer Anzeige jeweils mit der Anordnung der grafischen Steuerelemente von Funktionsbezeichnungen mit hoher Hierarchiestufe im fest definierten Bereich der Benutzerschnittstelle.

In einer Ausführungsvariante ist das Layoutmodul eingerichtet, die Grösse des fest definierten Bereichs der Benutzerschnittstelle und die Grösse des variablen Bereichs der Benutzerschnittstelle abhängig von der Grösse der Anzeige zu bestimmen.

In einer weiteren Ausführungsvariante ist das Layoutmodul eingerichtet, die Grösse des fest definierten Bereichs der Benutzerschnittstelle und die Grösse des variablen Bereichs der Benutzerschnittstelle abhängig von einer Anzahl berechtigter Funktionen eines Benutzers zu bestimmen.

Eine weitere Ausgestaltung der Erfindung zeichnet sich dadurch aus, dass eine Vorrichtung zum Erzeugen von grafischen Benutzerschnittstellen für die Bedienung von einer oder mehreren Maschinen ein Datenerfassungsmodul zum Entgegennehmen und Speichern von Funktionsbezeichnungen und Benutzeridentifizierungen, einen ersten Datenspeicher zum Speichern von Zuordnungen von Funktionsbezeichnungen zu Benutzeridentifizierungen, und einen zweiten Datenspeicher zum Speichern von Zuordnungen von grafischen Steuerelementen zu den Funktionsbezeichnungen umfasst. Die Vorrichtung umfasst zudem ein Layoutmodul zum Bestimmen von benutzerspezifischen Anordnungen der grafischen Steuerelemente basierend auf der Zuordnung von Funktionsbezeichnungen zu Benutzeridentifizierungen, und einen Schnittstellengenerator zum Erzeugen der grafischen Benutzerschnittstellen zur Darstellung auf einer Anzeige jeweils für einen Benutzer basierend auf der betreffenden benutzerspezifischen Anordnung der grafischen Steuerelemente.

In einer weiteren Ausführungsvariante ist das Layoutmodul eingerichtet, die benutzerspezifische Anordnung zu bestimmen basierend auf definierten Regeln mit Farbkompositionsregeln, Symbolkombinationsregeln und/oder Designregeln.

Eine weitere Ausgestaltung der Erfindung zeichnet sich dadurch aus, dass eine Vorrichtung zum Erzeugen von grafischen Benutzerschnittstellen für die Bedienung von einer oder mehreren Maschinen einen ersten Datenspeicher zum Speichern einer Grafiksymbolbibliothek mit einer Vielzahl von grafischen Steuerelementen und einen zweiten Datenspeicher zum Speichern einer Funktionsbibliothek mit einer Vielzahl von Funktionsbezeichnungen, denen jeweils Klassifizierungsinformationen zugeordnet sind, umfasst. Die Vorrichtung umfasst überdies ein Datenerfassungsmodul zum Entgegennehmen von Selektionen von Funktionsbezeichnungen aus der Funktionsbibliothek für die Benutzerschnittstelle und einen dritten Datenspeicher zum Zuordnen von grafischen Steuerelementen aus der Grafiksymbolbibliothek zu den Funktionsbezeichnungen. Die Vorrichtung ist zudem mit einem Layoutmodul versehen zum Gruppieren und Anordnen der den selektierten Funktionsbezeichnungen zugeordneten grafischen Steuerelemente in der Benutzerschnittstelle basierend auf den Klassifizierungsinformationen, und umfasst einen Schnittstellengenerator zum Erzeugen der grafischen Benutzerschnittstelle zur Darstellung auf einer Anzeige basierend auf der Grafiksymbolbibliothek und der bestimmten Gruppierung und Anordnung der grafischen Steuerelemente.

In einer Ausführungsvariante ist das Layoutmodul eingerichtet, die grafischen Steuerelemente in der Benutzerschnittstelle zudem basierend auf gespeicherten Designregeln zu gruppieren und anzuordnen.

In einer weiteren Ausführungsvariante umfasst die Vorrichtung zudem ein Elementzuweisungsmodul, das eingerichtet ist, die grafischen Steuerelemente aus der Grafiksymboibibliothek den Funktionsbezeichnungen zuzuordnen jeweils abhängig von den Klassifizierungsinformationen, die der betreffenden Funktionsbezeichnung zugeordnet sind.

Eine weitere Ausgestaltung der Erfindung zeichnet sich dadurch aus, dass eine Vorrichtung zum Bedienen von einer oder mehreren Maschinen, eine berührungsempfindliche Anzeige mit einer grafischen Benutzerschnittstelle umfasst, die mehrere als grafische Symbole dargestellte Steuerelemente aufweist, dass die Steuerelemente Funktionen zugeordnet sind, für die ein eingeloggter oder angemeldeter Benutzer berechtigt ist, und dass die Vorrichtung ein elektromechanisches Steuerelement zur benutzerunabhängigen Eingabe eines Steuerbefehls umfasst.

Eine weitere Ausgestaltung der Erfindung zeichnet sich dadurch aus, dass eine Vorrichtung zum Bedienen von einer oder mehreren Maschinen, eine berührungsempfindliche Anzeige mit einer grafischen Benutzerschnittstelle umfasst, die mehrere als grafische Symbole dargestellte Steuerelemente aufweist, dass die Steuerelemente in einem fest definierten Bereich der Anzeige angeordnet sind, dass die grafische Benutzerschnittstelle einen variablen Bereich aufweist, der ausserhalb des fest definierten Bereichs der Anzeige angeordnet ist, und dass der variable Bereich der Anzeige abhängig von einer Grösse der Anzeige definiert wird.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
- Fig. 1, 1a, 1b, 1c:: zeigen Blockdiagramme, welche schematisch verschiedene Ausführungsformen von Benutzerschnittstellensystemen mit einer Vorrichtung zum Bedienen von einer oder mehreren Maschinen illustrieren.
- Fig. 2:: zeigt ein Blockdiagramm einer Vorrichtung zum Erzeugen von grafischen Benutzerschnittstellen für die Bedienung von einer oder mehreren Maschinen.
- Fig. 3:: zeigt ein Flussdiagram eines Verfahrens zum Erzeugen von grafischen Benutzerschnittstellen für die Bedienung von einer oder mehreren Maschinen.

### Wege zur Ausführung der Erfindung

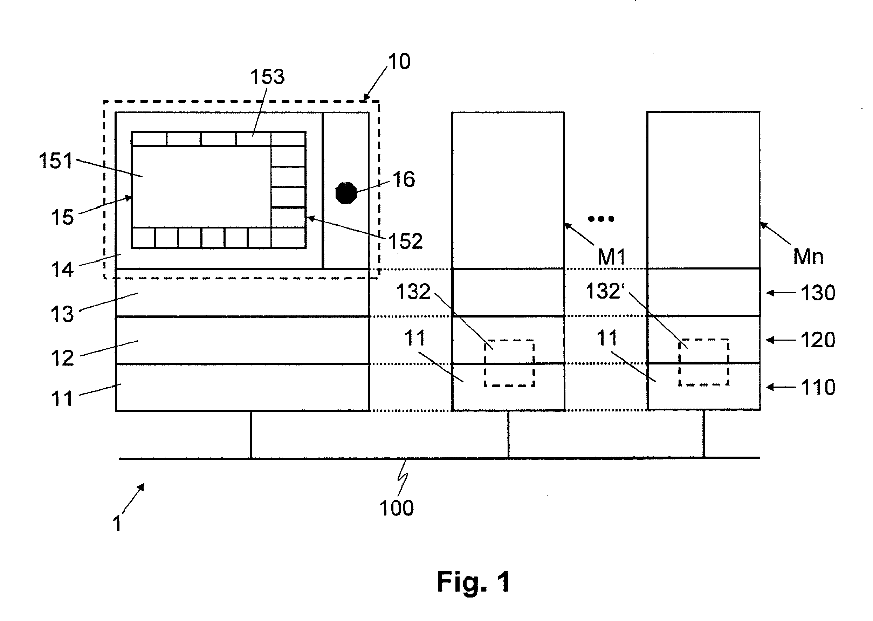

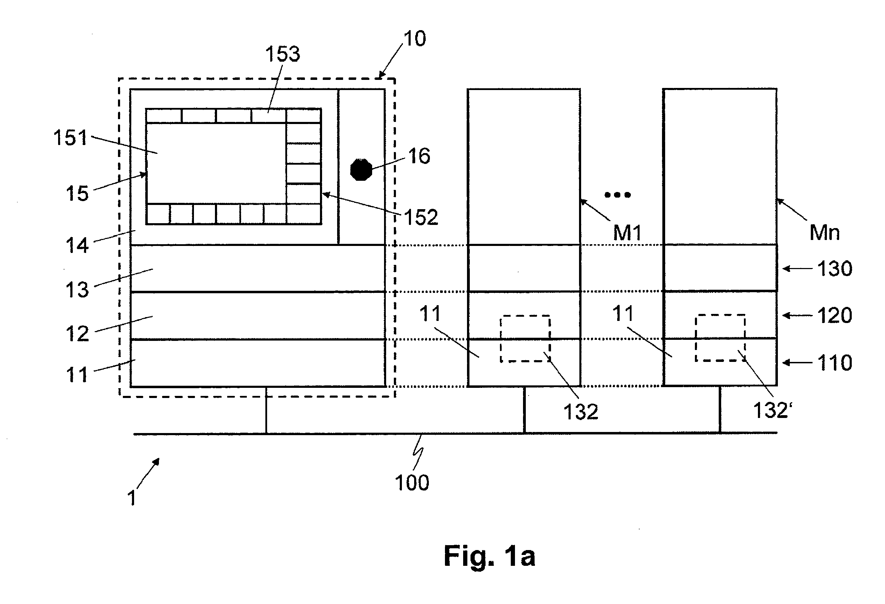

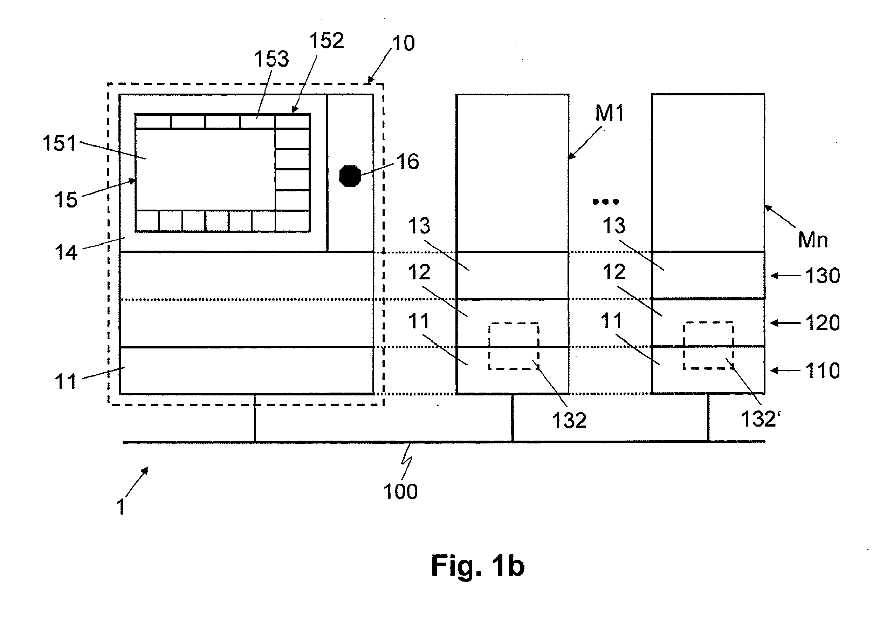

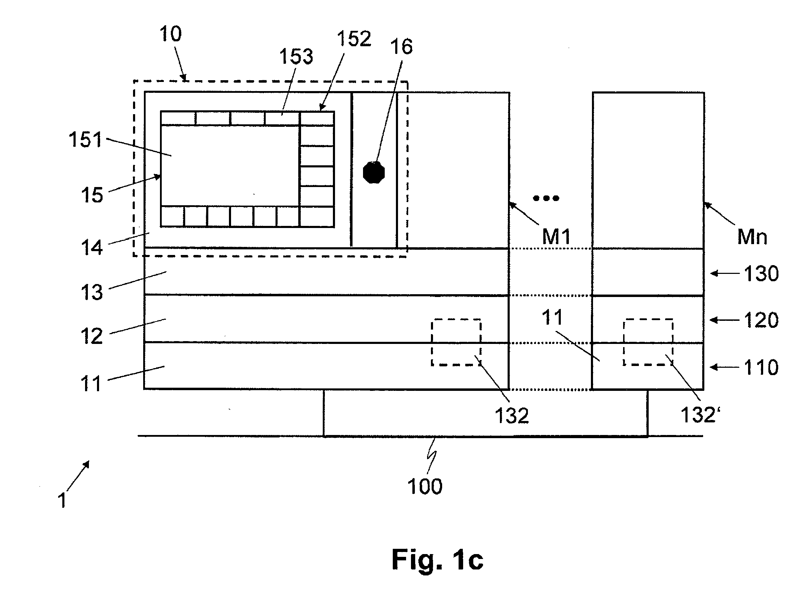

In den Figuren 1, 1a, 1b und 1c bezeichnet das Bezugszeichen 1 ein Benutzerschnittstellensystem zum Bedienen von einer oder mehreren Maschinen M1 bis Mn, in jeweils einer oder mehreren Produktionslinien, insbesondere Maschinen für Drucksysteme (wie sog. Rotationen) und Druckproduktweiterverarbeitungssysteme, umfassend Druckmaschinen, Förderer und Sammelanlagen zum Sammeln (im weiteren Sinne) bzw. Kollektionieren von Produktkollektionen aus mehreren Produkten durch Zusammentragen, Einstecken oder Sammeln (im engeren Sinne), Weiterverarbeitungsanlagen zum Einstecken, Folieren, Heften, Kleben, Schneiden, Verschweissen, und/oder Stapeln einschliesslich Anleger, Paketausleger, Stangenanleger, Wickelstationen und Umreifungsmaschinen, sowie Zeitungsversandsysteme, digitale On-Demand-Buchproduktionssystem und Verteilungs- und Versandanlagen ("Mailroom"). Das Benutzerschnittstellensystem bezieht sich ausserdem auf Maschinenaggregate, die Zusatzfunktionen erfüllen, wie beispielsweise Anbringen von Klebeetiketten (z.B. Memostick^{®}) oder Bedrucken im Verarbeitungsfluss und hier ebenfalls als Maschinen bezeichnet werden. Die Produkte sind insbesondere flächige, flexible Druckprodukte unterschiedlicher Dicke aber auch andere flächige Produkte wie beispielsweise Datenträger oder andere Beilagen.

Das Benutzerschnittstellensystem 1 umfasst mindestens eine Bedienvorrichtung 10 mit einer Anzeige 14, vorzugsweise eine berührungsempfindliche Anzeige 14, zur Darstellung einer mit dem Bezugszeichen 15 bezeichneten grafischen Bedienoberfläche respektive grafischen Benutzerschnittstelle. Typischerweise umfasst das Benutzerschnittstellensystem 1 mehrere Bedienvorrichtungen 10 und Anzeigen 14, die je nach Ausführungsform als eigenständige Vorrichtungen mit eigenem Gehäuse in unterschiedlichen Entfernungen zu oder direkt bei den Maschinen M1, Mn angeordnet sind (z.B. Fig. 1a und 1b), oder die zusammen mit einer der Maschinen M1, Mn in einem gemeinsamen Gehäuse ausgeführt sind (z.B. Fig. 1c). Die Anzeigen 14 der Bedienvorrichtungen 10 weisen unterschiedliche Anzeigegrössen auf, die sich um ein Mehrfaches voneinander unterscheiden, beispielsweise Anzeigegrössen mit einer Bildschirmdiagonale von 5", 10" oder 15", aber auch viel grössere Bildschirme, vorzugsweise mit einem Bildseitenverhältnis von 16:9. Als berührungsempfindliche (Touch-Screen) Systeme können z.B. induktive oder druckbezogene Sensortechniken zum Einsatz kommen, die besonders auch industriellen Gegebenheiten Rechnung tragen.

Wie in den Figuren 1, 1a, 1b und 1c dargestellt ist, weist das Benutzerschnittstellensystem 1 mehrere funktionale Module auf, insbesondere ein Kommunikationsmodul 11, ein Anpassungsmodul 12 und ein Präsentationsmodul 13. Die funktionalen Module sind vorzugsweise als programmierte Softwaremodule ausgeführt, welche Computerprogrammcode zur Steuerung eines oder mehrerer Prozessoren umfassen, der auf einem fest oder entfernbar mit den Prozessoren verbundenen computerlesbaren Datenträger gespeichert ist.

Wie in Fig. 1 schematisch dargestellt ist, sind die Bedienvorrichtung 10 und die eine oder mehreren Maschinen M1, Mn über eine Kommunikationsverbindung 100 verbunden. Über der Kommunikationsverbindung 100 sind eine Kommunikationsschicht 110, eine darüberliegende Technologieschicht 120 und eine wiederum darüberliegende Präsentationsschicht 130 angeordnet. Ein Austausch von Daten und Funktionsaufrufen findet jeweils über die Schichtgrenzen hinweg statt.

Die Kommunikationsschicht 110 umfasst Kommunikationsmodule 11 zur Ausführung von Kommunikationsprotokollen für den Daten- und Signalisierungsaustausch zwischen der Bedienvorrichtung 10 und den Maschinen M1, Mn. Je nach Ausführung ist die Kommunikationsverbindung 100 eine leiterlose (drahtlose) oder leitergebundene (z.B. verdrahtete) Kommunikationsschnittstelle zwischen zwei Computern oder Prozessoren (z.B. Fig. 1a und 1b), beispielsweise ein Lokalnetz (LAN) oder Systembus, oder eine auf einem gemeinsamen Computer oder Prozessor ausgeführte Softwareschnittstelle (z.B. in Fig. 1c zwischen der Bedienvorrichtung 10 und der Maschine M1).

Die Technologieschicht umfasst unterschiedliche Technologieplattformen in den Maschinen M1, Mn und mindestens ein zwischen Anzeige 14 und den Maschinen M1, Mn angeordnetes Anpassungsmodul 12, welches auf einem Computer respektive Prozessor von der Bedienvorrichtung 10 (z.B. Fig. 1a) und/oder von einer oder mehreren der Maschinen M1, Mn ausgeführt ist (z.B. Fig. 1b und 1c). Die unterschiedlichen Technologieplattformen umfassen beispielsweise unterschiedliche Computerbetriebssysteme, Applikationen, Entwicklungsplattformen, Softwarebibliotheken (Frameworks) und/oder Softwareschnittstellen für Applikationen, Funktionen, Datenaustausch und/oder Signalisierung. Das Anpassungsmodul 12 ermöglicht eine Anpassung an die unterschiedlichen Technologieplattformen und einen plattformunabhängigen Austausch von Nutzdaten zwischen den Maschinen M1, Mn und der Bedienoberfläche 15 der Bedienvorrichtung 10.

Die Präsentationsschicht 130 umfasst mindestens ein zwischen Anzeige 14 und Maschinen M1, Mn angeordnetes Präsentationsmodul 13, welches auf einem Computer respektive Prozessor von der Bedienvorrichtung 10 (z.B. Fig. 1a) und/oder von einer oder mehreren der Maschinen M1, Mn ausgeführt ist (z.B. Fig. 1b und 1c). Das Präsentationsmodul 13 ist eingerichtet, die Bedienoberfläche 15 während des Betriebs der Maschinen M1, Mn (in Echtzeit) abhängig von aktuellen Werten von Systemparametern, die aktuelle Systemzustände, - bedingungen und -konfigurationen des Benutzerschnittstellensystems 1, von Systembenutzern und/oder der Maschinen M1, Mn betreffen. Das Präsentationsmodul 13 ist insbesondere eingerichtet, die Bedienoberfläche 15 während des Betriebs der Maschinen M1, Mn abhängig von der Anzeigegrösse auf der Anzeige 14 darzustellen, beispielsweise unter Berücksichtigung und Anwendung von definierten Designregeln, Klassifizierungsinformationen, Prozessablaufsstrukturen und/oder Hierarchiestufen, die später beschrieben werden.

Wie in den Figuren 1, 1a, 1b und 1c schematisch dargestellt ist, umfasst die Bedienoberfläche 15 respektive Benutzerschnittstelle 15 mehrere grafische Steuerelemente 153, beispielsweise selektierbare und aktivierbare Knöpfe, Funktionsknöpfe, Drehknöpfe, Reiter, Register, Schieberegler, Menus, etc. mit unterschiedlichen grafischen Symbolen und/oder Beschriftungen, wobei die Beschriftungen jeweils in einer von mehreren selektierbaren und konfigurierbaren Sprachen ausgeführt sind.

In einer Ausführungsvariante umfasst die Bedienoberfläche einen festen Bereich 152 und einen dynamischen Bereich 151. Der feste Bereich 152 der Bedienoberfläche 15 weist eine feste Zuordnung und Anordnung von grafischen Steuerelementen 153 auf, die beispielsweise in einem definierten Bereich auf der Anzeige 14 angeordnet sind. Der dynamische Bereich 151 der Bedienoberfläche 15, der beispielsweise ebenfalls einem definierten Bereich auf der Anzeige 14 angeordnet ist, weist hingegen keine feste sondern eine sich dynamisch ändernde Zuordnung und Anordnung von grafischen Steuerelementen 153 auf, beispielsweise abhängig vom Betriebszustand der Maschinen M1, Mn oder vom Benutzer gewählten Funktionen. Je nach Ausführungsvariante und/oder Anwendung kann der variable Bereich den festen Bereich während einer definierten Zeit temporär wenigstens teilweise überlappen. Die temporäre und teilweise Überlappung der Teilbereiche ist vorzugsweise an die Grösse der Anzeige 14 gebunden und auf kleinere Anzeigeversionen begrenzt, beispielsweise nur für 5" Anzeigen oder, in einem kleineren Ausmass bei grosser Funktions- respektive Steuerelementdichte oder bei der Ausgabe von umfangreichen Informationsmengen über die Bedienoberfläche, auch bei 10" oder selbst 15" Anzeigen.

In einer Ausführungsvariante ist das Präsentationsmodul 13 eingerichtet, die Anordnung und Ausgestaltung des festen Bereichs 152 und des dynamischen Bereichs 151 der Bedienoberfläche 15 während des Betriebs der Maschinen M1, Mn (in Echtzeit) abhängig von der Anzeigegrösse auf der Anzeige 14 darzustellen, beispielsweise unter Berücksichtigung und Anwendung von definierten Designregeln, Klassifizierungsinformationen, Prozessablaufsstrukturen und/oder Hierarchiestufen, die später beschrieben werden.

Der dynamische Bereich 151 kann bei komplexen Systemen auch als sog. scrollende Anzeige ausgebildet sein. Deren Bewegung kann horizontal oder vertikal scrollend vorgesehen werden. Wichtig ist wegen der Systemsicherheit, dass dabei der feste Bereich 152 die sicherheitsrelevanten Funktionen fix anzeigt um auf diese schnell zugreifen zu können. Wenn bei besonderen Ausführungsformen auch systemkritische Bedienschritte ohne Bestätigungsdialoge schnell ausgeführt werden sollen, können besondere Bedienpatterns vorgesehen werden (z.B. gleichzeitiges Betätigen weit distanzierter virtueller Buttons mit Fingern beider Hände oder besondere Bewegungen auf der berührungsempfindlichen Anzeige). Dies ist namentlich im Rahmen industrieller Gegebenheiten notwendig, da hier Fehlbedienungen zu Schäden oder Produktionsstörungen führen können.

Das Präsentationsmodul 13 ist zudem eingerichtet, die Bedienoberfläche 15 auf der Anzeige 14 während des Betriebs der Maschinen M1, Mn (in Echtzeit) benutzerspezifisch darzustellen. Das Präsentationsmodul 13 ist insbesondere eingerichtet, die Bedienoberfläche 15 abhängig von den gespeicherten Berechtigungen eines eingeloggten oder angemeldeten Benutzers mit unterschiedlichen grafischen Steuerelementen und mit unterschiedlicher Anordnung dieser Steuerelemente darzustellen. Selbst die Anordnung und Ausgestaltung des festen Bereichs 152 und des dynamischen Bereichs 151 der Bedienoberfläche 15 wird in einer Variante auf der Anzeige 14 benutzerspezifisch dargestellt. Dabei werden wiederum definierte Designregeln, Klassifizierungsinformationen, Prozessablaufsstrukturen und/oder Hierarchiestufen berücksichtigt und angewandt, die später beschrieben werden.

Wie in den Figuren 1, 1a, 1b und 1c ersichtlich ist, ist die Bedienvorrichtung 10 zudem mit einem elektromechanischen Steuerelement 16 versehen, das eine benutzer- und berechtigungsunabhängige und zeitlich unverzögerte Eingabe eines Steuerbefehls oder eines Steuerwerts ermöglicht, beispielsweise zum Auslösen einer Not- oder Stoppfunktion, wenn die Anzeige 14 und/oder die grafische Bedienoberfläche gestört ist, beispielsweise ein Schalter oder Druckknopf und/oder ein Dreh- oder Schieberegler.

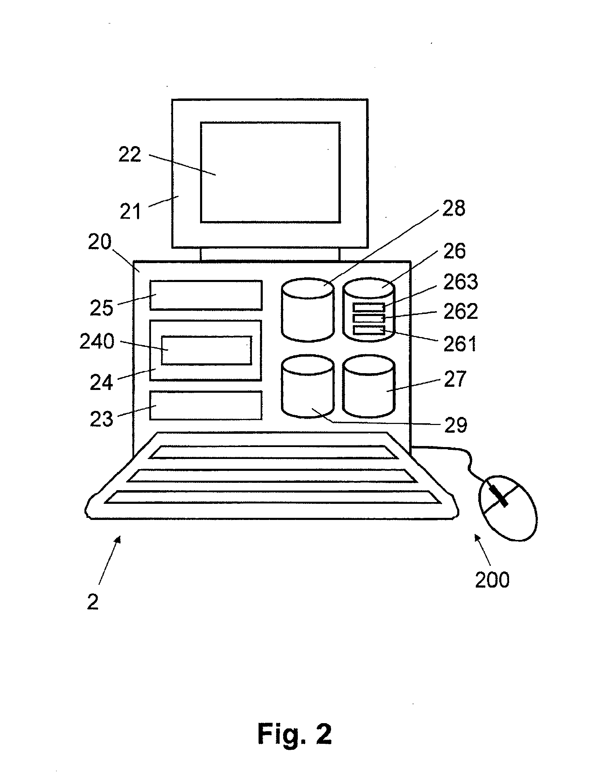

In der Fig. 2 bezeichnet das Bezugszeichen 2 eine Vorrichtung zum Erzeugen von grafischen Benutzerschnittstellen mit Bedienoberflächen 15 für die Bedienung von einer oder mehreren Maschinen M1, Mn. Die Vorrichtung 2 umfasst einen oder mehrere betriebsbereite Computer 20 mit einem oder mehreren Prozessoren, einer Anzeige 21 zur Darstellung einer vorzugsweise grafischen Benutzerschnittstelle 22 und Daten, und Bedienelementen 200 für die Eingabe von Daten und Befehlen.

Wie in der Fig. 2 schematisch dargestellt ist, umfasst die Vorrichtung 2 zudem mehrere funktionale Module, insbesondere ein Datenerfassungsmodul 23, ein Layoutmodul 24, ein Elementzuweisungsmodul 240 und einen Schnittstellengenerator 25. Die funktionalen Module sind vorzugsweise als programmierte Softwaremodule ausgeführt, welche Computerprogrammcode zur Steuerung eines oder mehrerer Prozessoren umfassen, der auf einem fest oder entfernbar mit der Vorrichtung 2 verbundenen computerlesbaren Datenträger gespeichert ist. Die Vorrichtung 2 umfasst zudem mehrere Datenspeicher mit einer Funktionsbibliothek 26, einer Grafiksymbolbibliothek 27, einer Benutzerdatenbank 28 und einer Regeldatenbank 29. Die Funktionsbibliothek 26 umfasst Datenspeicher mit Funktionsbezeichnungen von definierten Funktionen, einer Zuordnung von Hierarchiestufen zu den Funktionsbezeichnungen 261, einer Zuordnung von Klassifizierungsinformationen zu den Funktionsbezeichnungen 262 und einer Zuordnung von grafischen Steuerelementen zu den Funktionsbezeichnungen 263. Die Benutzerdatenbank 28 umfasst Datenspeicher mit Benutzerprofilen, welche Benutzeridentifizierungen und zugeordnete Berechtigungen umfasst, insbesondere Berechtigungen für die verschiedenen Funktionen. In einer Ausführungsvariante werden den Funktionsbezeichnungen zudem Prozessablaufsstrukturen respektive Prozesskennungen zugeordnet.

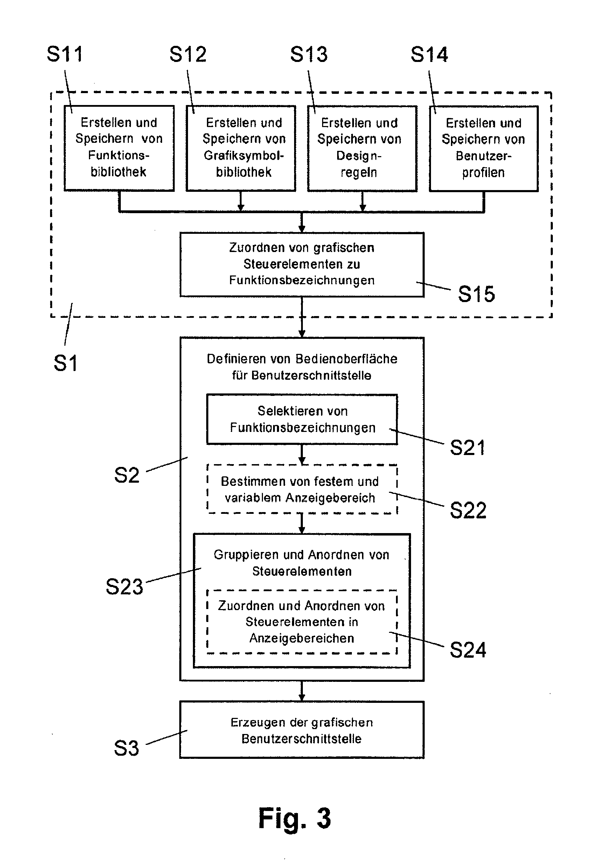

In den nachfolgenden Abschnitten werden die Funktionalität und mögliche Schrittsequenzen für ein Verfahren zum Erzeugen von grafischen Benutzerschnittstellen für die Bedienung von einer oder mehreren Maschinen mit Bezug zur Fig. 3 erläutert.

In de Figur 3 bezeichnet das Bezugszeichen S1 einen Block mit vorbereitenden Schritten zum Erzeugen der grafischen Benutzerschnittstellen 15.

Im Schritt S11 wird mittels des Datenerfassungsmoduls 23 eine Funktionsbibliothek 26 erstellt und gespeichert. Das Datenerfassungsmodul 23 nimmt über die grafische Benutzerschnittstelle 22 Funktionsbezeichnungen von definierten Funktionen zum Konfigurieren, Steuern, Überwachen und Warten der Maschinen M1, Mn entgegen und speichert diese in der Funktionsbibliothek 26. Die Funktionen umfassen beispielsweise Lese- und Schreiboperationen zum Setzen respektive Lesen von Steuer- und Parameterwerten der Maschinen M1, Mn währen einer Konfigurations- und/oder Betriebsphase, und Steuerbefehle zum Einschalten, Starten, Stoppen und Ausschalten der Maschinen M1, Mn. Das Datenerfassungsmodul 23 ermöglicht zudem die Funktionen respektive deren Funktionsbezeichnungen zu gruppieren und vorzugsweise hierarchisch und/oder gemäss Prozessablaufstrukturen zu organisieren. Zu diesem Zweck werden Klassifizierungsinformationen mit Funktionsgruppen, Funktionsuntergruppen, Anwendungskennungen, Maschinentypkennungen, Geschäftsbereichskennungen, Produkttypkennungen, Produktkennungen, Prozesskennungen und Hierarchiestufen erfasst und den Funktionsbezeichnungen zugeordnet. In der Funktionsbibliothek 26 wird darauf basierend eine Zuordnung von Hierarchiestufen zu Funktionsbezeichnungen 261 und eine Zuordnung von Klassifizierungsinformationen zu Funktionsbezeichnungen 262 erstellt und gespeichert. Somit können Funktionen für verschiedene Funktionsarten, Anwendungen, Maschinentypen, Geschäftsbereiche, Produktionsprozesse/-abfäufe und Produkttypen unterschieden und hierarchisch, beispielsweise in Baum- und/oder Menustrukturen, geordnet werden.

Im Schritt S12 wird mittels des Datenerfassungsmoduls 23 eine Grafiksymbolbibliothek 27 erstellt und gespeichert. Das Datenerfassungsmodul 23 nimmt über die grafische Benutzerschnittstelle 22 grafische Symbole (einschliesslich fotografische Bilder, z.B. Abbildungen von Druckprodukten, Maschinen M1, Mn oder Maschinenteilen) für Steuerelemente, und Eingabefelder/Eingabemasken in Form von Dateinamen, und /oder Dateisammlungsnamen entgegen und erstellt und speichert darauf basierend eine Grafiksymbolbibliothek 27. Die Grafiksymbolbibliothek 27 umfasst beispielsweise Steuerelementbezeichnungen zugeordnet zu grafischen Steuerelementen mit verschiedenen grafischen Symbolen (Muster, Bildinhalt) in jeweils unterschiedlicher Grösse, Farbgebung und/oder verschiedenen Dateiformaten zur effizienten Unterstützung verschiedener Technologieplattformen, Applikationen, Anzeigegrössen und/oder Auflösungen.

Im Schritt S13 werden mittels des Datenerfassungsmoduls 23 eine Regeldatenbank 29 erstellt und gespeichert Das Datenerfassungsmodul 23 nimmt über die grafische Benutzerschnittstelle 22 Designregeln mit Farbkompositionsregeln und Symbo[kombinationsregeln entgegen und speichert diese in der Regeldatenbank 29. Die Designregeln definieren beispielsweise die Anzahl gleichzeitig in der Benutzerschnittstelle respektive Bedienoberfläche 15 darstellbaren grafischen Steuerelemente, die Anzahl in einer horizontalen Reihe angeordneten grafischen Steuerelemente, die Anzahl in einer vertikalen Spalte angeordneten grafische Steuerelemente, die minimale Grösse von grafischen Steuerelementen, die zulässige Kombinationen von grafischen Steuerelementen, die zulässige und/oder bevorzugte Farbkombinationen von benachbarten grafischen Steuerelementen, die Farbkombinationen von in einer horizontalen Reihe angeordneten grafischen Steuerelementen, und/oder die Farbkombinationen von in einer vertikalen Spalte angeordneten grafischen Steuerelementen. In einer Ausführungsvariante sind die Designregeln klassenspezifisch, d.h. abhängig von den Klassifizierungsinformationen der Funktionsbezeichnungen, grössenspezifisch, d.h. abhängig von der Grösse der Anzeige 14, und hierarchieabhängig, d.h. abhängig von der Hierarchiestufe der dem Steuerelement 153 zugeordneten Funktionsbezeichnung.

Im Schritt S14 werden mittels des Datenerfassungsmoduls 23 Benutzerprofile erfasst und in einer Benutzerdatenbank 28 gespeichert. Das Datenerfassungsmodul 23 nimmt über die grafische Benutzerschnittstelle 22 Benutzeridentifizierungen und zugeordnete Berechtigungen für Funktionen respektive Funktionsbezeichnungen entgegen und erstellt darauf basierend entsprechende Benutzerprofile mit Funktionsberechtigungen in der Benutzerdatenbank 28.

Im Schritt S15 werden den Funktionsbezeichnungen in der Funktionsbibliothek 26 grafische Steuerelemente aus der Grafiksymbolbibliothek 27 zugeordnet. Die Zuordnung erfolgt mittels des Datenerfassungsmoduls 23 über die grafische Benutzerschnittstelle 22 und/oder durch das Elementzuweisungsmodul 240 automatisch auf der Basis der Klassifizierungsinformationen, die den betreffenden Funktionsbezeichnungen zugeordnet sind. Die Zuordnung von grafischen Steuerelementen, ggf. einschliesslich verschiedener grafisch dargestellter Eingabefelder und Eingabemasken, zu Funktionsbezeichnungen 263 wird in der Funktionsbibliothek 26 gespeichert.

Im Schritt S2 wird die Bedienoberfläche 15 für die Benutzerschnittstelle 15 definiert.

Im Schritt S21 werden mittels des Datenerfassungsmoduls 23 Funktionen und ggf. Eingabefelder und Eingabemasken für die Bedienoberfläche 15 definiert. Das Datenerfassungsmodul 23 nimmt über die grafische Benutzerschnittstelle 22 Selektionen von Funktionen respektive Funktionsbezeichnungen (und ggf. Eingabefelder/Eingabemasken) aus der Funktionsbibliothek 26 entgegen, die in der Bedienoberfläche 15 verfügbar sein sollen. In einer Variante sind den Eingabefeldern/Eingabemasken verschiedene sprachspezifische Übersetzungsmodule zugeordnet, welche Benutzern die Eingabe von Sprachbefehlen in verschiedenen Sprachen ermöglichen.

Im optionalen Schritt S22 werden mittels des Datenerfassungsmoduls 23 in der Anzeige 14 ein erster Teilbereich als fest definierter Anzeigebereich 151 und ein zweiter Teilbereich als variabler für die Bedienoberfläche 15 definiert. Das Datenerfassungsmodul 23 nimmt über die grafische Benutzerschnittstelle 22 entsprechende Koordinaten und/oder Grössenangaben entgegen. In einer Ausführungsvariante erfolgt die Bestimmung der festen und variablen Anzeigebereiche durch das Layoutmodul 24. Das Layoutmodul 24 bestimmt beispielsweise die Grösse des fest definierten Bereichs und die Grösse des variablen Bereichs abhängig von der Grösse der Anzeige 14 und/oder abhängig von der (maximalen) Anzahl berechtigter Funktionen der Benutzer.

Im Schritt S23 erfolgt die Gruppierung und Anordnung der Steuerelemente 153 in der Benutzerschnittstelle respektive Bedienoberfläche 15 durch das Layoutmodul 24. Die Wahl der

Steuerelemente 153 ist durch die Selektion der Funktionen im Schritt S21 und die Zuordnung von grafischen Steuerelementen zu Funktionsbezeichnungen 263 bestimmt. Das Layoutmodul 24 bestimmt die Gruppierung und Anordnung der grafischen Steuerelemente 153 in der Bedienoberfläche 15 basierend auf den gespeicherten Designregeln der Regeldatenbank 29, einschliesslich der Farbkompositionsregeln und Symbolkombinationsregeln, und basierend auf den Klassifizierungsinformationen und/oder Hierarchiestufen, die den Funktionsbezeichnungen in der Funktionsbibliothek 26 zugeordnet sind. Das Layoutmodul 24 bestimmt benutzerspezifische Anordnungen der grafischen Steuerelemente 153 basierend auf der Zuordnung von Funktionsbezeichnungen zu Benutzeridentifizierungen in den gespeicherten Benutzerprofilen der Benutzerdatenbank 28.

Im optionalen Schritt S24 erfolgt die Gruppierung, Zuordnung und Anordnung der Steuerelemente 153 auf die festen und variablen Anzeigebereiche 151, 152 der Bedienoberfläche 15 durch das Layoutmodul 24. Das Layoutmodul 24 bestimmt die Gruppierung und Anordnung der grafischen Steuerelemente 153 in der Bedienoberfläche 15 abhängig von den Hierarchiestufen, die den selektierten Funktionsbezeichnungen zugeordnet sind, wobei grafische Steuerelemente 153 von Funktionsbezeichnungen mit hoher Hierarchiestufe im fest definierten Anzeigebereich 151 und grafische Steuerelemente von Funktionsbezeichnungen mit tiefer Hierarchiestufe im variablen Anzeigebereich 152 der Bedienoberfläche 15, angeordnet werden.

Im Schritt S3 erzeugt der Schnittstellengenerator 25 die grafische Benutzerschnittstelle respektive Bedienoberfläche 15 zur Darstellung auf der Anzeige 14 basierend auf der definierten Gruppierung und Anordnung der Steuerelemente 153.

Bei Verwendung portabler Bedienvorrichtungen, insbesondere im industriellen Umfeld, wie bei komplexen Druck- und Druckweiterverarbeitungsanlagen, ist es namentlich auch aus sicherheitstechnischen Anforderungen notwendig, dass die Zuordnung von Bedienvorrichtung 10 und Maschine(n) m1, Mn nicht (in störenden Momenten) unterbrochen bzw. aufgelöst wird. Im Rahmen von Schritt 2 ist es daher bevorzugt möglich, im festen oder variablen Anzeigebereich 151, 152 nicht nur Bedienelemente einer Maschine M1 vorzugeben, sondern zudem auch einen Signalbereich oder Direktzugriff für mindestens eine zweite Maschine Mn. Auf diese Weise ist es möglich, direkt auf der portablen Bedienvorrichtung den Benutzer auf dringliche Bedienschritte auf einer (oder mehreren) weiteren Maschinen M1 bis Mn aufmerksam zu machen. Besonders bei kleinen Bildschirmgrössen ist damit das erfindungsgemässe Benutzerschnittstellensystem betriebssicher einsetzbar. Dem Benutzer wird durch einen solchen Direktzugriff (besonders hervorgehobene oder dargestellte Funktionsbezeichnung), vorzugsweise in einem besonderen Anzeigebereich, ein sofortiges Umschalten auf eine andere Maschine oder ein anderes Maschinenaggregat ermöglicht. Besonders bei komplexen Verarbeitungsanlagen, wie beispielsweise bei einer Vielzahl von Zuführvorrichtungen zu einer Kollektionierungsvorrichtung ist es erwünscht, wenn dem Bedienpersonal trotz kleinen Bedienvorrichtungen ein übersichtliches Bedienen mehrerer bzw. einer Vielzahl von Maschinen M1 bis Mn mittels einer intelligenten Anpassung der Bedienoberfläche 15 ermöglicht wird. Da bei solchen kleinen Bedienoberflächen die Bedienfunktionen nicht gleichzeitig für mehrere oder gar alle Maschinen M1, Mn darstellbar sind, kann durch die dynamische Anzeigeanpassung mittels einer Direktzugriffsfunktion ein störungssicheres Bedienen komplexer Anlagenbereiche gewährleistet werden. Die weiter oben beschriebene Kommunikationsverbindung 100 (drahtlose oder verdrahtet) zwischen Bedienvorrichtung 10 und Maschinen M1 bis Mn ermöglicht die beschriebene dynamische intelligente Umschaltung der Anzeige 14. Zu diesem Zwecke ist es bei besonderen Anordnungen vorteilhaft, bei einer vorbestimmten Gruppe oder bei allen Maschinen M1 bis Mn die Kommunikations schicht 110 bzw. Technologieschicht 120 mit einem zusätzlichen Logikmodul 132, 132' auszustatten, welches über die Kommunikationsverbindung 100 Interrupt-Aufrufe an eine oder mehrere Bedienvorrichtung(en) 10 vornehmen kann. Ein solcher Interrupt-Aufruf löst daraufhin die vorbeschriebene Anpassung der Bedienoberfläche 15 aus. Das Logikmodul 132, 132' kann hard- oder softwaremässig ausgebildet werden. Für solche Interrupt-Aufrufe wird vorzugsweise auf der Benutzeroberfläche 15 ein besonderer Bereich reserviert, mindestens jedoch ein Bereich für einen Direktzugriff (virtueller Button, Warndialog oder ähnliches).

In einer Ausführungsvariante ist die Vorrichtung 2 zum Erzeugen der grafischen Benutzerschnittstelle respektive Bedienoberfläche 15 als eigenständiges (stand-alone) System ausgeführt, welches in einer ersten Phase ausführbaren Computercode generiert und speichert, der zu einem späteren Zeitpunkt, in einer zweiten Phase, auf einem Computer respektive Prozessor der Bedienvorrichtung 10 und/oder der Maschinen M1, Mn ausgeführt wird, um die grafische Benutzerschnittstelle respektive Bedienoberfläche 15 auf der Anzeige 14 zu erzeugen. In weiteren Ausführungsvarianten sind zumindest gewisse funktionale Module, Funktionen und/oder Datenspeicher der Vorrichtung 2, beispielsweise das Layoutmodul 24, der Schnittstellengenerator 25, die Funktionsbibliothek 26, die Grafiksymbolbibliothek 27, die Benutzerdatenbank 28 und die Regeldatenbank 29, als Teil des Präsentationsmoduls 13 ausgeführt, um die Bedienoberfläche 15 in Echtzeit dynamisch zu definieren, zu erzeugen und auf der Anzeige 14 entsprechend darzustellen. Dadurch wird insbesondere die dynamische Anpassung der Bedienoberfläche 15 und ihrer Teilbereiche an unterschiedliche Anzeigegrössen und Benutzerberechtigungen unter Berücksichtigung und Anwendung der definierten Designregeln ermöglicht.

Abschliessend soll angeführt werden, dass in der Beschreibung zwar Computerprogrammcode spezifischen funktionalen Modulen zugeordnet wurde und dass die Ausführung von Schritten in einer bestimmten Reihenfolge dargestellt wurde, dass der Fachmann jedoch verstehen wird, dass der Computerprogrammcode unterschiedlich strukturiert und die Reihenfolge von mindestens gewissen Schritten geändert werden kann, ohne dabei vom Schutzgegenstand abzuweichen. Zudem wird Der Fachmann auch verstehen, dass die angeführten funktionalen Module in verschiedenen Ausführungsvarianten vollständig oder wenigstens teilweise mit Hardwarekomponenten ausgeführt sein können.

## Patentansprüche

1. Ein computerbasiertes Benutzerschnittstellensystem (1) zum Bedienen von Maschinen (M1, Mn), umfassend:
eine berührungsempfindliche Anzeige (14) zum Darstellen einer grafischen Bedienoberfläche (15) und zum Entgegennehmen und Ausgeben von Nutzdaten mit Funktionsbefehlen und Funktionsparametern über die Bedienoberfläche (15),
ein Kommunikationsmodul (11) zum Austauschen der Nutzdaten mit einer oder mehreren der Maschinen (M1, Mn),
ein zwischen Maschinen (M1, Mn) und Anzeige (14) eingefügtes Präsentationsmodul (13) zum Darstellen der Bedienoberfläche (1 5) auf der Anzeige (14) abhängig von Systemparametern.

2. Das Benutzerschnittstellensystem (1) nach Anspruch 1, **dadurch gekennzeichnet, dass** das Präsentationsmodul (13) eingerichtet ist, die Bedienoberfläche (15) auf der Anzeige (14) abhängig von einer definierten Grösse der Anzeige (14) darzustellen.

3. Das Benutzerschnittstellensystem (1) nach einem der Ansprüche 1 oder 2, **dadurch gekennzeichnet, dass** die Maschinen (M1, Mn) unterschiedliche Technologieplattformen aufweisen, und dass das Benutzerschnittstellensystem (1) ein zwischen Technologieplattformen und Präsentationsmodul (13) eingefügtes Anpassungsmodul (12) umfasst zum plattformunabhängigen Austausch von Nutzdaten zwischen Maschinen (M1, Mn) und Bedienoberfläche (15).

4. Das Benutzerschnittstellensystem (1) nach einem der Ansprüche 1 bis 3, **dadurch gekennzeichnet, dass** das Präsentationsmodul (13) eingerichtet ist, die Bedienoberfläche (15) auf der Anzeige (14) abhängig von Berechtigungen eines eingeloggten Benutzers mit unterschiedlichen grafischen Steuerelementen (153) und mit unterschiedlicher Anordnung dieser Steuerelemente (153) darzustellen.

5. Das Benutzerschnittstellensystem (1) nach einem der Ansprüche 1 bis 4, **gekennzeichnet durch** ein elektromechanisches Steuerelement (16) zur berechtigungsunabhängigen Eingabe eines Steuerbefehls.

6. Das Benutzerschnittstellensystem (1) nach einem der Ansprüche 1 bis 5, **dadurch gekennzeichnet, dass** die Bedienoberfläche (15) mehrere als grafische Symbole dargestellte Steuerelemente (153) für eine direkte Eingabe von Steuerbefehlen aufweist, welche in einem fest definierten Bereich (152) der Anzeige (14) angeordnet sind, und dass die Bedienoberfläche (15) einen variablen Bereich (151) aufweist, der ausserhalb des fest definierten Bereichs (152) der Anzeige (14) angeordnet ist und für temporär verfügbare Steuerelemente (153) und zum Eingeben und Ausgeben von Nutzdaten vorgesehen ist.

7. Das Benutzerschnittstellensystem (1) nach einem der Ansprüche 1 bis 6, **dadurch gekennzeichnet, dass** das Präsentationsmodul (13) eingerichtet ist, abhängig von einer definierten Grösse der Anzeige (14) einen ersten Teilbereich der Anzeige (14) für fest verfügbare Steuerelemente (153) und einen zweiten Teilbereich der Anzeige (14) für temporär verfügbare Steuerelemente (153) bereitzustellen.

8. Das Benutzerschnittstellensystem (1) nach Anspruch 7, **dadurch gekennzeichnet, dass** das Präsentationsmodul (13) eingerichtet ist, abhängig von einer definierten Grösse der Anzeige (14) den zweiten Teilbereich der Anzeige (14) mindestens teilweise den ersten Teilbereich der Anzeige (14) überlappend anzuordnen.

9. Das Benutzerschnittstellensystem (1) nach einem der Ansprüche 1 bis 8, **dadurch gekennzeichnet, dass** die Bedienoberfläche (15) mehrere als grafische Symbole (153) dargestellte Steuerelemente (153) aufweist, dass die Steuerelemente (153) Funktionen zugeordnet sind, für die ein eingeloggter Benutzer berechtigt ist, und dass das Benutzerschnittstellensystem (1) ein elektromechanisches Steuerelement (16) zur benutzerunabhängigen Eingabe eines Steuerbefehls umfasst.

10. Das Benutzerschnittstellensystem (1) nach einem der Ansprüche 1 bis 9, **dadurch gekennzeichnet, dass** die Bedienoberfläche (15) mehrere als grafische Symbole (153) dargestellte Steuerelemente (153) aufweist, dass die Steuerelemente (153) in einem fest definierten Bereich (152) der Anzeige (14) angeordnet sind, dass die Bedienoberfläche (15) einen variablen Bereich (151) aufweist, der ausserhalb des fest definierten Bereichs (1 52) der Anzeige (14) angeordnet ist, und dass der variable Bereich (151) der Anzeige (14) abhängig von einer Grösse der Anzeige (14) definiert wird.
